# EUROPEAN PATENT APPLICATION

(11) **EP 1 432 226 A1**
(43) Date of publication of application: **23.06.2004**
(21) Application number: 03027809.7
(22) Date of filing: 03.12.2003
(51) Int. Cl.: H04N 1/00, H04M 1/02, H04M 1/247

(54) **Processed image data transmitting system, portable telephone and processed image data transmission program**

(30) Priority: 20.12.2002 JP 2002369786
(71) Applicant: NEC CORPORATION, Tokyo (JP)
(72) Inventor: Yunoki, Kazuyuki, Minato-ku Tokyo (JP)
(74) Representative: VOSSIUS & PARTNER

(57) **Abstract**

A camera control portion receives a camera image of a subject acquired by a camera connected to a camera terminal via the camera terminal, delivers the camera image to a display output portion, captures an image from the camera image presented by the display output portion, and stores the image in its interior as a still image representing the subject. A characteristic point extracting portion prepares characteristic point data from the still image. A characteristic point comparing portion compares the characteristic point data obtained from the still image of the subject with corresponding characteristic point data obtained from image data of persons stored in a memory portion, determines a person whose characteristic point data are most highly correspondent with those of the subject, and reads dial data connected with the person from the memory portion. An e-mail preparation management portion picks up an e-mail address from the dial data, and attaches the still image to an e-mail to be sent to the e-mail address. A mail communication control portion transmits the e-mail to the address by means of a communication management portion and antenna.

## Description

The present invention relates to a processed image data transmitting system, portable telephone, and processed image data transmission program, particularly, to a processed image data transmitting system handling e-mails, and processed image data transmission program.

JP-A-2002-152341 describes a technique related to "a portable telephone device equipped with a camera unit for acquiring image data of an object by photographing the object, the device comprising an image signal processing means for receiving image data from the camera unit, and processing the data; a memory means for storing the processed image data; and an image comparing means for comparing groups of processed image data thus acquired with each other."

JP-A-11-136612 describes a technique related to "an image data transmitting apparatus comprising an electronic camera constituted so as to receive the insertion of a memory card and capable of automatically transmitting electronic image data acquired by the camera to a separate, external apparatus to which the electronic image data is addressed, the automatic transmission of image data to the addressee being achieved by relating said image data with data including a unique number assigned to the addressee, storing the relation, and transmitting, after being connected to a transmitting means such as a portable telephone, said image data to the addressee based on the stored relation, and a transmitting circuit which automatically connects the apparatus to a telephone line leading to the addressee based on the unique number data stored in the memory card."

JP-A-6-168317 describes a technique for identifying a subject by extracting characteristic points from image data of the subject's face fed externally, comparing the characteristic points with similar characteristic points of human faces stored in a database for identification, and calculating a distance between each pair of corresponding characteristic points.

The object of the present invention is to improve convenience in the transmission of e-mails, by automatically extracting the address of a subject whose image is acquired by a camera, and transmitting an e-mail carrying the image of the subject to the address thus extracted.

A processed image data transmitting system of the invention comprising:
means for preparing a still image of a subject from video image of the subject acquired by a camera, comparing characteristic point data extracted from the still image of the subject with corresponding characteristic point data obtained from the image data of persons stored in a memory, extracting an e-mail address stored in connection with a person whose characteristic point data are most correspondent to those of the subject, and transmitting an e-mail to which the still image of the subject is attached to the e-mail address thus extracted.

A portable telephone of the invention comprising:
means for preparing a still image of a subject from video image of the subject acquired by a camera, comparing characteristic point data extracted from the still image of the subject with corresponding characteristic point data obtained from the image data of persons stored in a memory, extracting an e-mail address stored in connection with a person whose characteristic point data are most correspondent to those of the subject, and transmitting an e-mail to which the still image of the subject is attached to the e-mail address thus extracted.

A processed image data transmission program for causing a computer to perform a process comprising:
preparing a still image of a subject from video image of the subject acquired by a camera, comparing characteristic point data extracted from the still image of the subject with corresponding characteristic point data obtained from the image data of persons stored in a memory, extracting an e-mail address stored in connection with a person whose characteristic point data are most correspondent to those of the subject, and transmitting an e-mail to which the still image of the subject is attached to the e-mail address thus extracted.

The above and other objects, features and advantages of the present invention will become apparent from the following detailed description when taken with the accompanying drawings in which:
FIG. 1 is a block diagram for illustrating the constitution of an embodiment of the present invention;
FIG. 2 is a flowchart for illustrating the operation of the embodiment of the present invention;
FIG. 3 is a subsequent flowchart for illustrating the operation of the embodiment of the present invention;
FIG. 4A illustrates a series of displays exhibited on the screen;
FIG. 4B illustrates a series of displays exhibited on the screen;
FIG. 4C illustrates a series of displays exhibited on the screen;
FIG. 5A illustrates a subsequent series of displays exhibited on the screen; and
FIG. 5B illustrates a subsequent series of displays exhibited on the screen.

Next, a first embodiment of the present invention will be detailed with reference to the accompanying drawings.

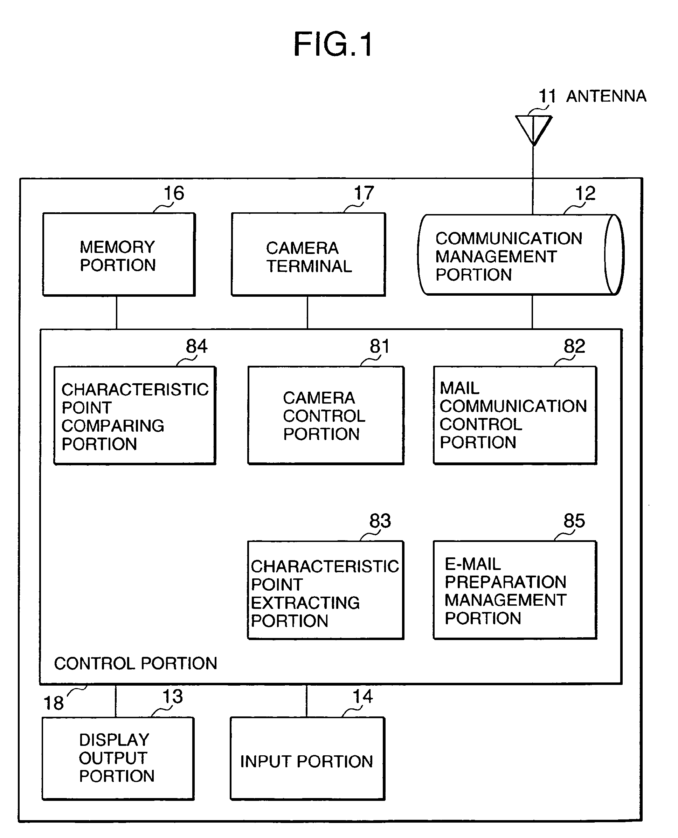

Referring to FIG. 1, a device representing the first embodiment of the present invention comprises an antenna 11 for transmitting/receiving RF (radio-frequency) signals via a wireless channel to/from a base station and a communication management portion 12; a display output portion 13 responsible for display (e.g., finder); an input portion 14 through which the device receives input fed by the user (e.g., keys, mouse and/or buttons); a memory portion 16 (e.g., memory device such as a memory, hard-disk or the like) for storing e-mail data, dial data, and camera images; a camera terminal 17 connected to a camera for acquiring camera images; and a control portion 18.

The memory portion 16 stores, in advance, image data of one or more persons, and dial data of those persons in connection with their image data. The dial data of a given person includes his/her phone number, e-mail address, etc.

The control portion 18 comprises a camera control portion 81 for controlling the camera in the acquisition of camera images; a mail communication control portion 82 responsible for the transmission/reception of e-mails; a characteristic point extracting portion 83 for extracting, when the user takes a camera image of a subject and requires the transmission of an e-mail, characteristic points (subject characteristic points) from the camera image of the subject under the control of the camera control portion 81; a characteristic point comparing portion 84 for comparing the subject characteristic points extracted by the characteristic point extracting portion 83 with corresponding characteristic points extracted from the image data of persons which are stored in the memory portion 16 in connection with the dial data of those persons, and determining a registered person whose image data give characteristic points least departed from (or most correspondent with) the subject characteristic points and picking up an e-mail address from dial data stored in connection with the person; and an e-mail preparation management portion 85 for attaching the image acquired by the camera to an e-mail, and instructing the mail communication control portion 82 to transmit the e-mail to the e-mail address picked up above.

The device representing the first embodiment of the present invention may be a portable telephone.

Now, the operation of the first embodiment of the present invention will be described with reference to attached drawings.

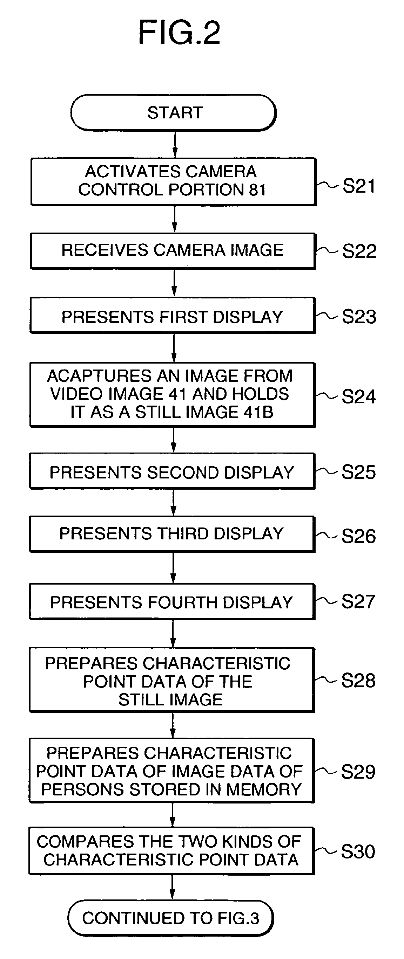

Firstly, steps required for the acquisition of a subject image with a camera up to the extraction of characteristic points from the subject image for characterizing the subject will be described with reference to FIG. 2.

When a user activates the camera control portion 81 of control portion 18 via the input portion 14 (step S21 in FIG. 2), the camera control portion 81 receives a camera image of a subject acquired by a camera connected to the camera terminal 17 via the camera terminal 17 (step S22), and delivers the camera image to the display output portion 13 which then presents a first display including the camera image of the subject (step S23).

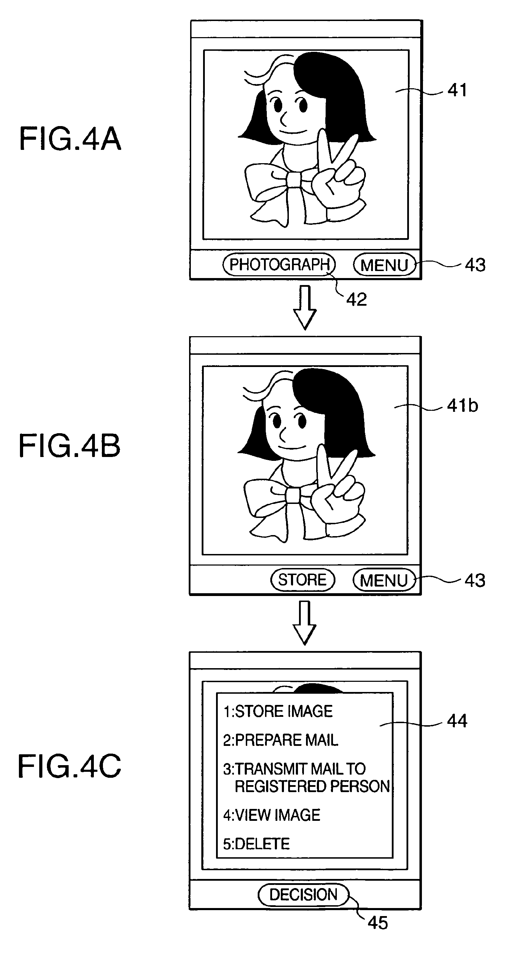

Referring to FIG. 4(a), the first display includes video image 41 representing the subject, a photographing button 42 and a menu button 43.

When the user selects an image of the subject by activating the photographing button 42 via the input portion 14, the camera control portion 81 captures that image from the video image 41 presented on the display output portion 13, and stores the image in the interior of the camera control portion 81 as a still image 41b representing the subject (step S24).

Next, the camera control portion 81 delivers output required for the presentation of a second display including the still image 41b stored as above to the display output portion 13 which then presents the second display including the still image 41b (step S25).

The second display shown in FIG. 4(b) includes the still image 41b and menu button 43.

When the user activates the menu button 43 via the input portion 14, the camera control portion 81 delivers output required for the presentation of a third display including the still image 41b to the display output portion 13 which then presents the third display including the still image 41b (step S26).

The third display shown in FIG. 4(c) includes a menu (comprising, for example, storage, mail preparation, mail transmission, image viewing and deletion), and decision button 45.

When the user selects "mail transmission to a registered person" in the menu 44 via the input portion 14, and confirms the selection by clicking the decision button 45, the camera control portion 81 takes the still image 41b stored in its interior and delivers the image to the characteristic point extracting portion 83 and also delivers output required for the presentation of a fourth display to the display output portion 13 which then presents a fourth display (step S27).

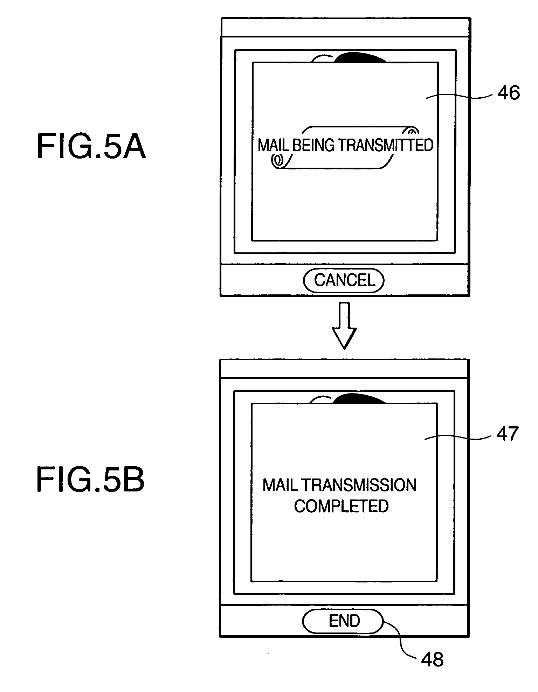

The fourth display shown in FIG. 5(a) includes a mail-transmission display 46 which tells the user that "the mail is being transmitted."

The characteristic point extracting portion 83, on receipt of the still image 41b from the camera control portion 81, extracts characteristic point data from the still image 41b (step S28).

The characteristic point extracting portion 83 inspects, for example, the eyes, eye-brows, nose, mouth, cheeks, and facial contour of the subject's face represented by the still image 41b, and obtains characteristic point data (subject characteristic point data) as a result of the inspection.

Next, the characteristic point extracting portion 83 reads the image data of persons stored in the memory portion 16, obtains corresponding characteristic point data (step S29), and delivers the characteristic point data of the registered persons as well as the subject characteristic point data obtained from the still image 41b of the subject to the characteristic point comparing portion 84. The image data of each registered person is connected with his/her dial data.

The characteristic point comparing portion 84 then compares the subject characteristic point data obtained from the still image 41b with the corresponding characteristic point data obtained from the image data of the registered persons (step S30).

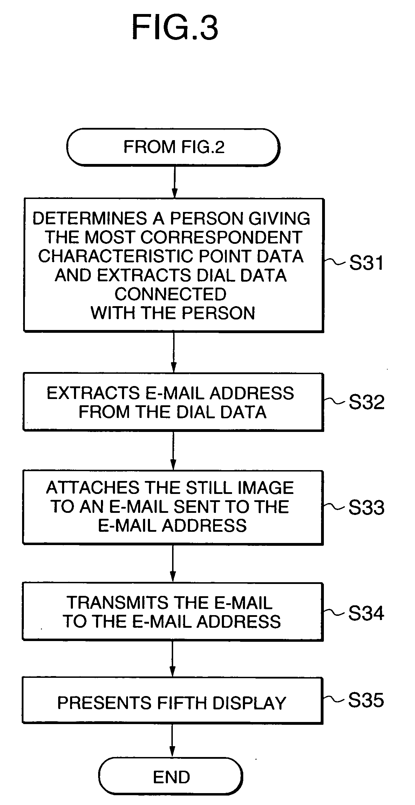

The characteristic point comparing portion 84 determines a registered person whose characteristic point data are least departed from the subject characteristic point data (least, for example, in terms of the distance between each pair of characteristic points taken for comparison), and fetches dial data related with the person from the memory portion 16 (step S31 in FIG. 3), and delivers the dial data to the e-mail preparation management portion 85. To achieve the last-mentioned step, the technique described, for example, in the Japanese Unexamined Patent Application Publication No. 6-163817 may be employed.

On receipt of the dial data from the characteristic point comparing portion 84, the e-mail preparation management portion 85 fetches the still image 41b from the camera control portion 81, and picks up an e-mail address (which is most probably the address of the subject represented by the still image) contained in the dial data (step S32).

The e-mail preparation management portion 85 causes the still image 41b to be attached to an e-mail to be sent to the address picked up above (step S33) and delivers the e-mail to the mail communication control portion 82.

On receipt of the e-mail from the e-mail preparation management portion 85, the mail communication control portion 82 transmits the e-mail via the communication management portion 12 and antenna 11 (step S34).

The mail communication control portion 82 then delivers a signal notifying the completed transmission of the e-mail to the camera control portion 81, and the camera control portion 81, on receipt of the signal notifying the completed transmission of the e-mail from the mail communication control portion 82, delivers output required for the presentation of a fifth display to the display output portion 13 which then presents a fifth display (step S35).

The fifth display shown in FIG. 5(b) includes a message 47 announcing the completion of mail transmission and termination button 48.

When the user selects the termination button 48 on the fifth display via the input portion 14, the camera control portion 81 delivers output required for the presentation of a first display to the display output portion 13 which then displays a first display.

To cope with a situation where a still image of a subject acquired by a camera has an expression considerably diverted from his/her normal expression, the characteristic point extracting portion 83 may be constructed so as to be able to detect physical traits responsible for the diverted expression, and to modify the image as appropriate to compensate for the diversion, for example, to cause the mouth to be closed when said portion 83 finds the subject's mouth open, thereby improving the accuracy of comparison when characteristic point data extracted from the subject's image are compared with corresponding characteristic point data of registered persons.

Alternatively, the characteristic point extracting portion 83 may be constructed so as to be able to modify, when said portion 83 finds an image of a comparable person represented by image data stored in the memory portion 16 exhibits a face having an open mouth, the subject's face in the still image 41b to match the face of the comparable person, i.e., to cause the subject's face to have an open mouth, thereby improving the accuracy of comparison between the subject and the person.

If the device is incorporated in a portable telephone, necessary steps will be simplified, and convenience will be improved.

A second embodiment of the present invention is a method for transmitting processed image data by using a device comprising camera control portion, display output portion, characteristic point extracting portion, characteristic point comparing portion, mail preparation management portion and mail communication control portion, the method comprising the steps of causing the camera control portion to receive a camera image of a subject acquired by a camera (step S22 in Fig. 2), to deliver output necessary for the presentation of a first display including video image 41 representing the camera image and a photographing button 42, to capture, from the video image 41, an image which a user selects by clicking the photographing button 42, to store the image as a still image 41b in a memory (step S24), to deliver output necessary for the presentation of a second display including the still image 41b and menu button 43, to deliver, in response to the clicking of the menu button 43, output necessary for the presentation of a third display including the details of the menu containing, e.g., e-mail transmission, and to fetch, when the user clicks the e-mail transmission of the menu 44, the still image 41b from the memory; causing the display output portion to present the first, second and third displays on receipt of the outputs from the camera control portion (steps S23, S25 and S26); causing the characteristic point extracting portion to receive the still image 41b from the camera control portion, to prepare characteristic point data from the still image 41b (step S28), to read image data of persons stored in a memory portion 16, and to prepare corresponding characteristic point data from the stored image data of the persons (step S29); causing the characteristic point comparing portion to receive, from the characteristic point extracting portion, the characteristic point data prepared from the still image 41b of the subject as well as the characteristic point data prepared from the image data of the persons stored in the memory portion, to compare the subject characteristic point data with the corresponding characteristic point data of the registered persons (step S30), to determine a person whose characteristic point data are most highly correspondent with those of the subject, and to read dial data connected with the person from the memory portion 16 (step S31); causing the mail preparation management portion to receive the dial data from the characteristic point comparing portion, to fetch the still image 41b from the camera control portion, to pick up an e-mail address contained in the dial data (step S32), and to attach the still image 41b to an e-mail to be sent to the e-mail address (step S33); and causing the mail communication control portion to receive the e-mail from the mail preparation management portion and to transmit the e-mail to the address (step S34 in FIG. 3).

Next, a third embodiment of the present invention will be detailed with reference to the accompanying drawings.

The third embodiment of the present invention is a program for a computer installed in a device (e.g., portable telephone) comprising camera control portion, display output portion, characteristic point extracting portion, characteristic point comparing portion, mail preparation management portion and mail communication control portion, the computer, based on the program, instructing the camera control portion to receive a camera image of a subject acquired by a camera (step S22 in Fig. 2), to deliver output necessary for the presentation of a first display including video image 41 representing the camera image and a photographing button 42, to capture, from the video image 41, an image which a user selects by clicking the photographing button 42, to store the image as a still image 41b in a memory (step S24), to deliver output necessary for the presentation of a second display including the still image 41b and menu button 43, to deliver, in response to the clicking of the menu button 43, output necessary for the presentation of a third display including the details of the menu containing, e.g., e-mail transmission, and to fetch, when the user clicks the e-mail transmission of the menu 44, the still image 41b from the memory; instructing the display output portion to present the first, second and third displays on receipt of the outputs from the camera control portion (steps S23, S25 and S26); instructing the characteristic point extracting portion to receive the still image 41b from the camera control portion, to prepare characteristic point data from the still image 41b (step S28), to read image data of persons stored in a memory portion 16, and to prepare corresponding characteristic point data from the stored image data of the persons (step S29); instructing the characteristic point comparing portion to receive, from the characteristic point extracting portion, the characteristic point data prepared from the still image 41b of the subject as well as the characteristic point data prepared from the image data of the persons stored in the memory portion, to compare the subject characteristic point data with the corresponding characteristic point data of the registered persons (step S30), to determine a person whose characteristic point data are most highly correspondent with those of the subject, and to read dial data connected with the person from the memory portion 16 (step S31); instructing the mail preparation management portion to receive the dial data from the characteristic point comparing portion, to fetch the still image 41b from the camera control portion, to pick up an e-mail address contained in the dial data (step S32), and to attach the still image 41b to an e-mail to be sent to the e-mail address (step S33); and instructing the mail communication control portion to receive the e-mail from the mail preparation management portion and to transmit the e-mail to the address (step S34 in FIG. 3).

While the present invention has been described in connection with three preferred embodiments, it is to be understood that the subject matter encompassed by the present invention is not limited to those specific embodiments. On the contrary, it is intended to include all alternatives, modifications, and equivalents as can be included within the spirit and scope of the following claims.

## Claims

1. A processed image data transmitting system, comprising:
means for preparing a still image of a subject from video image of the subject acquired by a camera, comparing characteristic point data extracted from the still image of the subject with corresponding characteristic point data obtained from the image data of person(s), extracting an e-mail address stored in connection with a person whose characteristic point data are most correspondent to those of the subject, and transmitting an e-mail to which the still image of the subject is attached to the e-mail address thus extracted.

2. A portable telephone, comprising:
means for preparing a still image of a subject from video image of the subject acquired by a camera, comparing characteristic point data extracted from the still image of the subject with corresponding characteristic point data obtained from the image data of persons, extracting an e-mail address stored in connection with a person whose characteristic point data are most correspondent to those of the subject, and transmitting an e-mail to which the still image of the subject is attached to the e-mail address thus extracted.

3. The processed image data transmitting system as described in Claim 1, further comprising:
a memory unit;
a camera control portion which receives a camera image of a subject acquired by a camera, delivers output necessary for the presentation of a first display including video image representing the camera image, captures an image from the video image presented on the display, holds the image as a still image, delivers output necessary for the presentation of a second display including the held still image, delivers output necessary for the presentation of a third display including a menu which allows the selection of e-mail transmission;
a characteristic point extracting portion which receives the still image from the camera control portion, prepares characteristic point data from the still image, reads image data of person(s) stored in the memory unit, and prepares corresponding characteristic point data from the image data of the person(s);
a characteristic point comparing portion which receives, from the characteristic point extracting portion, the characteristic point data prepared from the still image of the subject as well as the characteristic point data prepared from the image data of the person(s), compares the characteristic point data of the subject with the characteristic point data of the person(s), determines a person whose characteristic point data are most highly correspondent with those of the subject, and reads dial data connected with the person from the memory unit;
a mail preparation management portion which receives the dial data from the characteristic point comparing portion, fetches the still image from the camera control portion, picks up an e-mail address contained in the dial data, and attaches the still image to an e-mail to be sent to the e-mail address; and
a mail communication control portion which receives the e-mail from the e-mail preparation management portion and transmits the e-mail to the e-mail address.

4. The portable telephone as described in Claim 2, further comprising:
a memory unit;
a camera control portion which receives a camera image of a subject acquired by a camera, delivers output necessary for the presentation of a first display including video image representing the camera image, captures an image from the video image presented on the display, holds the image as a still image in a memory, delivers output necessary for the presentation of a second display including the held still image, delivers output necessary for the presentation of a third display including a menu which allows the selection of e-mail transmission;
a characteristic point extracting portion which receives the still image from the camera control portion, prepares characteristic point data from the still image, reads image data of person(s) stored in the memory unit, and prepares corresponding characteristic point data from the image data of the person(s);
a characteristic point comparing portion which receives, from the characteristic point extracting portion, the characteristic point data prepared from the still image of the subject as well as the characteristic point data prepared from the image data of the person(s), compares the characteristic point data of the subject with the characteristic point data of the person(s), determines a person whose characteristic point data are most highly correspondent with those of the subject, and reads dial data connected with the person from the memory unit;
a mail preparation management portion which receives the dial data from the characteristic point comparing portion, fetches the still image from the camera control portion, picks up an e-mail address contained in the dial data, and attaches the still image to an e-mail to be sent to the e-mail address; and
a mail communication control portion which receives the e-mail from the e-mail preparation management portion and transmits the e-mail to the e-mail address.

5. The processed image data transmitting system as described in Claim 1, further comprising:
a memory unit;
a camera control portion which receives a camera image of a subject acquired by a camera, delivers output necessary for the presentation of a first display including video image representing the camera image and a photographing button, captures, from the video image, an image which a user selects by clicking the photographing button, holds the image as a still image in a memory, delivers output necessary for the presentation of a second display including the still image and a menu button, delivers, in response to the clicking of the menu button, output necessary for the presentation of a third display including the details of the menu containing e-mail transmission, and outputs the still image, when the user clicks the e-mail transmission of the menu;
a display output portion which presents the first, second and third displays on receipt of the outputs from the camera control portion;
a characteristic point extracting portion which receives the still image from the camera control portion, prepares characteristic point data from the still image, reads image data of person(s) stored in the memory unit, and prepares corresponding characteristic point data from the image data of the person(s);
a characteristic point comparing portion which receives, from the characteristic point extracting portion, the characteristic point data prepared from the still image of the subject as well as the characteristic point data prepared from the image data of the person(s) stored in the memory unit, compares the characteristic point data of the subject with the characteristic point data of the person(s) stored in the memory unit, determines a person whose characteristic point data are most highly correspondent with those of the subject, and reads dial data connected with the person from the memory unit;
a mail preparation management portion which receives the dial data from the characteristic point comparing portion, fetches the still image of the subject from the camera control portion, picks up an e-mail address contained in the dial data, and attaches the still image to an e-mail to be sent to the e-mail address; and
a mail communication control portion which receives the e-mail from the mail preparation management portion and transmits the e-mail to the address.

6. The portable telephone as described in Claim 2, further comprising:
a memory unit;
a camera control portion which receives a camera image of a subject acquired by a camera, delivers output necessary for the presentation of a first display including video image representing the camera image and a photographing button, captures, from the video image, an image which a user selects by clicking the photographing button, holds the image as a still image in a memory, delivers output necessary for the presentation of a second display including the still image and a menu button, delivers, in response to the clicking of the menu button, output necessary for the presentation of a third display including the details of the menu containing e-mail transmission, and outputs, the still image when the user clicks the e-mail transmission of the menu;
a display output portion which presents the first, second and third displays on receipt of the outputs from the camera control portion;
a characteristic point extracting portion which receives the still image from the camera control portion, prepares characteristic point data from the still image, reads image data of person(s) stored in the memory unit, and prepares corresponding characteristic point data from the image data of the person(s);
a characteristic point comparing portion which receives, from the characteristic point extracting portion, the characteristic point data prepared from the still image of the subject as well as the characteristic point data prepared from the image data of the person(s) stored in the memory unit, compares the characteristic point data of the subject with the characteristic point data of the person(s) stored in the memory unit, determines a person whose characteristic point data are most highly correspondent with those of the subject, and reads dial data connected with the person from the memory unit;
a mail preparation management portion which receives the dial data from the characteristic point comparing portion, fetches the still image of the subject from the camera control portion, picks up an e-mail address contained in the dial data, and attaches the still image to an e-mail to be sent to the e-mail address; and
a mail communication control portion which receives the e-mail from the mail preparation management portion and transmits the e-mail to the address.

7. A processed image data transmission program for causing a computer to perform a process, comprising:
preparing a still image of a subject from video image of the subject acquired by a camera; comparing characteristic point data extracted from the still image of the subject with corresponding characteristic point data obtained from the image data of person(s) , extracting an e-mail address stored in connection with a person whose characteristic point data are most correspondent to those of the subject, and transmitting an e-mail to which the still image of the subject is attached to the e-mail address thus extracted.

8. The processed image data transmission program as described in Claim 7, further comprising:
receiving a camera image of a subject acquired by a camera, delivering output necessary for the presentation of a first display including video image representing the camera image and a photographing button, capturing, from the video image, an image which a user selects by clicking the photographing button, holding the image as a still image, delivering output necessary for the presentation of a second display including the still image and a menu button, delivering, in response to the clicking of the menu button, output necessary for the presentation of a third display including the details of the menu containing e-mail transmission, and outputting the still image when the user clicks the e-mail transmission of the menu;
receiving the still image, preparing characteristic point data from the still image, reading image data of person(s) stored in the memory unit, and preparing corresponding characteristic point data from the image data of the person(s);
receiving the characteristic point data prepared from the still image of the subject as well as the characteristic point data prepared from the image data of the person(s) stored in the memory unit, comparing the characteristic point data of the subject with the characteristic point data of the person(s) stored in the memory unit, determining a person whose characteristic point data are most highly correspondent with those of the subject, and reading dial data connected with the person from the memory unit;
receiving the dial data, fetching the still image of the subject, picking up an e-mail address contained in the dial data, and attaching the still image to an e-mail to be sent to the e-mail address; and
receiving the e-mail and transmitting the e-mail to the address.

9. The processed image data transmission program as described in Claim 7, further comprising:
receiving a camera image of a subject acquired by a camera, delivering output necessary for the presentation of a first display including video image representing the camera image and a photographing button, capturing, from the video image, an image which a user selects by clicking the photographing button, holding the image as a still image, delivering output necessary for the presentation of a second display including the still image and a menu button, delivering, in response to the clicking of the menu button, output necessary for the presentation of a third display including the details of the menu containing e-mail transmission, and outputting the still image, when the user clicks the e-mail transmission of the menu;
presenting the first, second and third displays on receipt of the outputs;
receiving the still image, preparing characteristic point data from the still image, reading image data of person(s) stored in the memory unit, and preparing corresponding characteristic point data from the image data of the person(s);
receiving the characteristic point data prepared from the still image of the subject as well as the characteristic point data prepared from the image data of the person(s) stored in the memory unit, comparing the characteristic point data of the subject with the characteristic point data of the person(s) stored in the memory unit, determining a person whose characteristic point data are most highly correspondent with those of the subject, and reading dial data connected with the person from the memory unit;
receiving the dial data, fetching the still image of the subject, picking up an e-mail address contained in the dial data, and attaching the still image to an e-mail to be sent to the e-mail address; and
receiving the e-mail, transmitting the e-mail to the address.
